# EUROPEAN PATENT SPECIFICATION

(11) **EP 3 280 923 B1**
(45) Date of publication and mention of the grant of the patent: **12.02.2020**
(21) Application number: 16777375.3
(22) Date of filing: 08.04.2016
(51) Int. Cl.: F16B 37/04, B23P 19/06

(54) **METHOD FOR INSTALLING A SELF-CLINCHING FASTENER**
VERFAHREN ZUR INSTALLATION EINES SELBSTSCHLIESSENDEN BEFESTIGUNGSELEMENTS
PROCÉDÉ D'INSTALLATION D'UNE ATTACHE À AUTO-FIXATION

(30) Priority: 10.04.2015 US 201562145870 P
(43) Date of publication of application: 14.02.2018
(73) Proprietor: R B & W Manufacturing LLC, Streetsboro, OH 44241 (US)
(72) Inventor: THOMAS, David, E., Streetsboro, OH 44241 (US)
(74) Representative: Findlay, Alice Rosemary
(86) International application number: PCT/US2016/026688
(87) International publication number: WO 2016/164753

(56) References cited:
- EP-A1- 2 618 009
- EP-A1- 2 618 010
- DE-A1-102013 218 605
- GB-A- 2 401 661
- US-A- 3 811 171
- US-A- 5 067 224
- US-A- 6 021 562
- US-A1- 2005 076 492
- US-A1- 2009 056 403
- US-A1- 2012 142 440

## Description

### BACKGROUND OF THE INVENTION

The present invention relates to a method for installing self clinching fasteners in a steel substrate Self-attaching fasteners are used in many industries such as, for example, the automotive and appliance industries to secure various components to metal panels. When clinch nuts are attached to the metal panels, screws or bolts are threaded into the clinch nuts and tightened to prescribed torque values. During installation, the clinch nuts must have sufficient rotational resistance to keep them from rotating relative to the metal panels when the screws are inserted and tightened. During service, the clinch nuts must have sufficient pull-through resistance to keep them from pulling out of the metal panel when external forces such as, for example, vibration or other tensile forces are applied. A clinch nut typically includes a central pilot or punch portion which at least partially extends into an opening in a metal plate or panel. When the clinch nut is self-piercing, the central pilot portion cooperates with tooling to form the opening in the metal panel when attaching the clinch nut to the metal panel. The clinch nut is attached to the metal panel by a die member which forms a mechanical interlock between the clinch nut and the metal panel. The die member typically deforms the metal panel about the opening into an annular groove of the clinch nut which encircles the pilot portion and/or deforms the pilot portion of the clinch nut over the metal panel to entrap the metal panel.

The development of hot stamping has led to stronger, lighter and more complex geometries for structural components. Basically, the components are formed from a metallic substrate. The substrate enters a press in a heated condition that allows it to be formed into the desired shape. The press is designed to quickly form the desired shape and quickly cool the substrate.

As mentioned above, self-clinching fasteners are a popular way for providing fastening points for relatively thin structures. Unfortunately, hot stamped components are often too hard to use such fasteners. Both creating a hole for the fastener in such a component and clinching the fastener to the component present difficult problems.

US2013327453 discloses a steel sheet substrate which is placed into a press after being heated into the austenitic condition, the die is closed and holes are punched into the steel whilst it is still in the austenitic condition. Prior to quenching the fastening nuts may be pressed into the steel component, and then the steel component is quenched to martensite.

### BRIEF SUMMARY OF THE INVENTION

The invention is defined by the claims.

In the disclosed embodiment the fasteners are installed in the components while they are still in the component forming die. The fasteners are installed after the substrate material is cool enough for the fastener to clinch properly, but not so hard that punching and clinching become problematic.

### BREIF DESCRIPTION OF THE DRAWINGS

FIG. 1 is a prior art perspective view of a self-piercing clinch nut;
FIG. 2 is schematic view of an example of a hot stamping press that includes a clinch nut installation tool; and
FIG. 3 is an example graph of the effect of cooling rate on steel properties.

### DETAILED DESCRIPTION OF EXAMPLE EMODIMENTS OF THE INVENTION

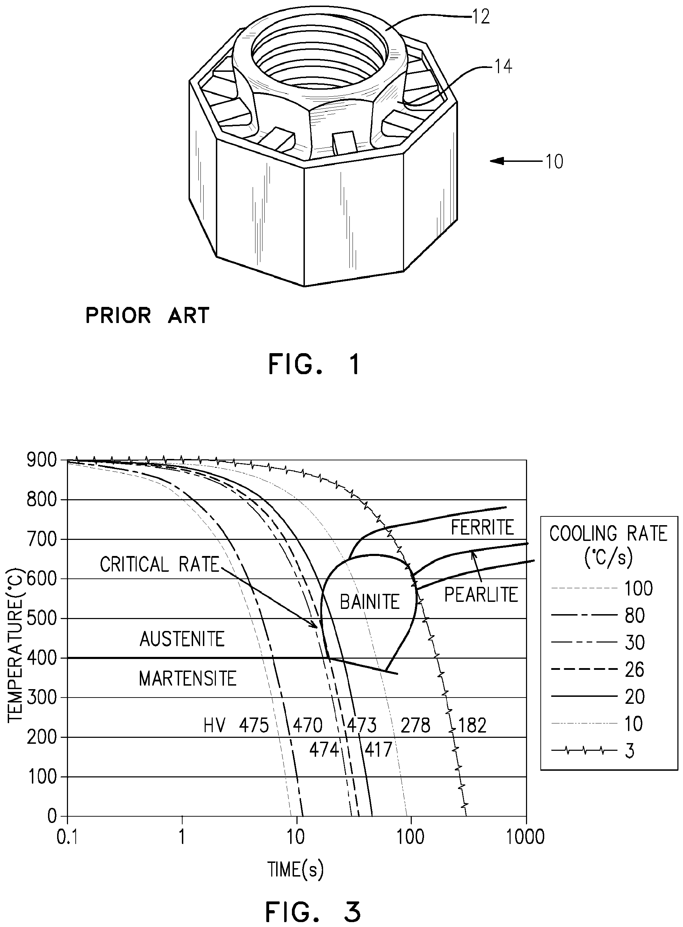

Referring to FIG. 1, an exemplary clinch nut 10 is shown. The appellation "nut" is somewhat misdescriptive as a clinch nut should never turn and often has no wrenching flats. It may have a threaded bore, an unthreaded bore or even include a stud that is threaded or non-threaded.

An aperture for attachment of the clinch nut to the substrate may be provided by other means, or in the case of the clinch nut 10, a punch portion 12 is used to punch through the substrate.

In general, clinch nuts have an annular indentation 14 into which a portion of the substrate is forced into thereby locking the clinch nut in place.

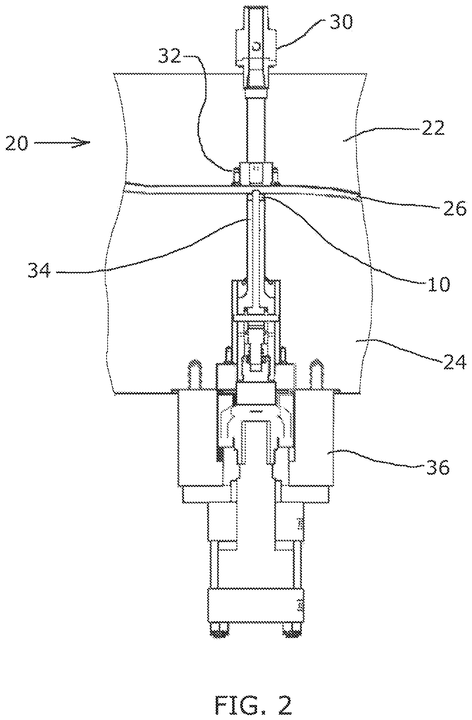

Referring to FIGS. 1 and 2, a hot press 20 includes a top forming die 22 and a bottom forming die 24. In between the dies 22, 24 is a substrate 26 that has been formed into the desired configuration by the press 20. Contained in the press 20 is a clinch nut installation tool 30. In this example, a stationary die 32 of the tool 30 is shown in the top forming die 22 and a moving die 34 of the tool 30 is shown in the bottom forming die 24. A clinch nut 10 is at the top of the moving die 34. In operation, an actuator 36 forces the moving die 34 to in turn force the punch portion 12 through the substrate 26 and to squeeze the substrate 26 between the clinch nut 10 and the stationary die 32, thereby deforming a portion of the substrate 26 into the annular indentation 14 to clinch the clinch nut 10 in place.

Many possible substrates have abrupt changes in the rate at which they harden as they cool. It is desirable to install the fastener after the substrate has hardened enough to allow the fastener to be clinched in place, but before the substrate suddenly becomes too hard.

One example of such a substrate is some steels. When the proper cooling rate is used, the substrate changes from austenite to much harder martensite very rapidly when the temperature of the substrate reaches the martensite start temperature. FIG. 3 shows an example graph of a steel where the martensite start temperature is 400 degrees Celsius. Differing curves are shown for different cooling rates of the substrate. Below the "critical rate" of cooling, the steel starts to take other forms.

At cooling rates above the critical rate, the substrate is substantially austenite when entering the press and substantially martensite when exiting the press.

A condition for when to install the fastener is when the installation occurs at a substrate temperature between +20% and -5% of the martensite start temperature. This provides a substrate firm enough to allow proper clinching of the clinch nut but not so hard as to prevent proper installation.

There are several ways of determining this condition. Some examples follow:
(a) Temperature sensors may be installed within the dies and used to trigger the installation tool at the desired temperature as measured by the sensors.
(b) The desired temperature is estimated by a control system that determines temperature based on the initial temperature of the substrate and the cooling rate of the press. The installation tool is then triggered at a time based on this estimate.
(c) The installation tool is triggered at a point in the hot press cycle that corresponds to said time.

It should be noted that the self-clinching fasteners may include without limitation fastener having a threaded bore, an un-threaded bore, a threaded stud, or an un-threaded stud.

It should be evident that this disclosure is by way of example and that various changes may be made by adding, modifying or eliminating details.

## Claims

1. A method for installing a self-clinching fastener in a steel substrate, comprising:
receiving the substrate in a shape-forming press, a temperature of the substrate being higher than a temperature of the press, the substrate being substantially austenite when being received in the press;
operating the press to shape the substrate, a hardness of the substrate undergoing a transition while the substrate is cooled in the press; and
installing the fastener in the substrate while the hardness of substrate undergoes said transition when the temperature of the substrate is between +20% and -5% of the martensite start temperature.

2. A method according to claim 1, wherein said substrate has an accelerated change of hardness from low to high during a portion of said cooling, said installation occurring prior to said portion.

3. A method according to claim 1, wherein said installation occurs at a time based on the initial temperature of the substrate and the press cooling rate.

## Patentansprüche

1. Verfahren zum Einfügen eines Einpress-Befestigungselements in ein Stahlträgermaterial, das Folgendes aufweist:
Aufnehmen des Substrats in einer formgestaltenden Presse, wobei eine Temperatur des Trägermaterials höher als eine Temperatur der Presse ist, wobei das Trägermaterial im Wesentlichen Austenit ist, wenn es in der Presse aufgenommen wird;
Bedienen der Presse zum Formen des Trägermaterials, wobei eine Härte des Trägermaterials einen Übergang durchläuft, während das Trägermaterial in der Presse abgekühlt wird; und
Einfügen des Befestigungselements in das Trägermaterial, während die Härte des Trägermaterials den genannten Übergang durchläuft, wenn die Temperatur des Trägermaterials zwischen +20 % und -5 % der Martensitanfangstemperatur ist.

2. Verfahren nach Anspruch 1, wobei das genannte Trägermaterial während eines Teils des genannten Abkühlens eine beschleunigte Härteveränderung von niedrig auf hoch hat, wobei das genannte Einfügen vor dem genannten Teil stattfindet.

3. Verfahren nach Anspruch 1, wobei das genannte Einfügen zu einem Zeitpunkt stattfindet, der auf der Anfangstemperatur des Trägermaterials und der Abkühlgeschwindigkeit der Presse basiert.

## Revendications

1. Procédé de pose d'une attache à auto-rivetage dans un substrat en acier, comprenant :
recevoir le substrat dans une presse de formage de forme, une température du substrat étant plus haute qu'une température de la presse, le substrat étant sensiblement austénite lorsque reçu dans la presse ;
faire fonctionner la presse pour former le substrat, une dureté du substrat subissant une transition pendant que le substrat est refroidi dans la presse ; et
poser l'attache dans le substrat pendant que la dureté du substrat subit ladite transition lorsque la température du substrat est entre +20 % et -5 % de la température de début de transformation martensitique.

2. Procédé selon la revendication 1, dans lequel ledit substrat présente un changement de dureté accéléré de basse à haute durant une partie dudit refroidissement, ladite pose survenant préalablement à ladite partie.

3. Procédé selon la revendication 1, dans lequel ladite pose survient à un moment basé sur la température initiale du substrat et la vitesse de refroidissement de la presse.
